Europäisches Patentamt

European Patent Office

Office européen des brevets

(11) Veröffentlichungsnummer: **0 343 111**
**A2**

## (12) EUROPÄISCHE PATENTANMELDUNG

(21) Anmeldenummer: **89810348.6**

(22) Anmeldetag: **11.05.89**

(51) Int. Cl.⁴: **B 65 G 17/08**
**B 65 G 1/08**

(30) Priorität: **11.11.88 DE 3838206**
**17.05.88 CH 1854/88**

(43) Veröffentlichungstag der Anmeldung:
**23.11.89 Patentblatt 89/47**

(84) Benannte Vertragsstaaten:
**AT BE CH DE ES FR GB GR IT LI LU NL SE**

(71) Anmelder: **CATRAK AG**
**Birsweg 1**
**CH-4253 Liesberg (CH)**

(72) Erfinder: **Haldimann, Hans-Rudolf**
**Via Borsari Welti 26**
**CH-6948 Porza (CH)**

(74) Vertreter: **Rottmann, Maximilian R.**
**c/o Rottmann, Zimmermann + Partner AG Glattalstrasse**
**37**
**CH-8052 Zürich (CH)**

(54) Rollenbahn für die Förderung von Paletten, insbesondere Holzpaletten.

㉗ Die Rollenbahn hat eine Mehrzahl von in mehreren parallelen Reihen (1, 2) angeordneten, in Förderrichtung drehbaren Leerlaufrollen (3). Als Zwischenträger für die Paletten sind in Förderrichtung geführte Ketten (4) vorgesehen, die jeweils eine Anzahl aufeinanderfolgender Rollen (3) einer Reihe lose umschlingen, wobei die Aussenseite der Ketten (4) als Auflager für die Paletten dient. Eine derartige Rollenbahn weist einen sehr niedrigen, mit geringer Streuung reproduzierbaren Rollwiderstand auf.

FIG.1

EP 0 343 111 A2

**Beschreibung**

## ROLLENBAHN FÜR DIE FÖRDERUNG VON PALETTEN, INSBESONDERE HOLZPALETTEN

Die Erfindung betrifft eine Rollenbahn für die Förderung von Paletten, insbesondere Holzpaletten, mit einer Mehrzahl von in mehreren parallelen Reihen angeordneten, in Förderrichtung drehbaren Leerlaufrollen und einem Zwischenträger.

Die Holzpalette, als deren typisches Beispiel die genormte EURO-Palette genannt werden kann, ist bei ihrer Einführung vor 40 Jahren nicht für die Förderung auf Rollenbahnen geplant worden. Damals wurde ein tiefstmöglicher Herstellungspreis für die in Nageltechnik ausgeführten Paletten angestrebt. Seither hat es sich immer als sehr schwierig erwiesen, Paletten dieser genormten Bauform mit Schwerkraft über geneigte Rollenbahnen ablaufen zu lassen, da die Holzpalette auf der Rollenbahn nicht überall gleichmässig aufliegt und daher die Tendenz hat, aus der Förderrichtung zu laufen. Versuche, diesen Vorgang mit seitlichen Führungsrollen zu verhindern, haben neue Nachteile gebracht, weil beim Kontakt der Paletten mit den Seitenrollen der Rollwiderstand sich verändert und infolgedessen sehr stark streut. Besonders eine an den Seitenrollen zum Stillstand gekommene Palette hat einen grossen Anlaufwiderstand, und es muss für den Fall eine Bahn mit einem grossen Gefälle von mehr als 3% vorgesehen werden, um einen sicheren Anlauf zu gewährleisten. Ein derartiges Gefälle bringt wegen der in den Paletten auf der schiefen Ebene gespeicherten grossen potentiellen Energie grosse Risiken mit sich.

Ist die Palette zufällig sehr exakt hergestellt, ist der Rollwiderstand niedrig; dann muss eine hohe Differenz zwischen diesem und der aus dem Gefälle wirkenden antreibenden Vorschubkraft weggebremst werden, um die andernfalls sich ergebende intensive und nicht zulässige Beschleunigung der Palette zu verhindern. Geeignete Bremsen sind sehr schwierig herzustellen, und deren Wirkung ist ziemlich beschränkt.

Die sehr grosse Zahl von auf dem Markt befindlichen, ohne Ausnahme unbefriedigenden Durchlaufrollenbahnsystemen für genormte Holzpaletten beweist, dass hier ein ungelöstes Problem vorliegt. Bei allen diesen bekannten Rollenbahnen besteht der Nachteil, dass eine Streuung des Palettengewichts zwischen 100 und 1000 kp nur mit einer baulichen Anpassung des Systems aufgenommen werden kann. Daher sind neuerdings teure und komplizierte Ersatzlösungen auf den Markt gekommen, bei denen die Paletten schrittweise befördert werden und die daher weder in wirtschaftlicher noch in betrieblicher Hinsicht befriedigen.

Die Schwierigkeit liegt in der Materialkombination zwischen den Tragrollen, die einen geringen Achsabstand haben müssen und somit einen Durchmesser von ca. 80 mm nicht überschreiten dürfen, und der genagelten ungenauen Bodenfläche der Holzpalette. Die Paletten sind genormt, in sehr grossen Stückzahlen vorhanden, und eine Neukonstruktion derselben, nur für deren bessere Nutzung auf Rollenbahnen, ist nicht zu erwarten.

Bekannt ist die Vermeidung dieses Nachteils durch Untersetzen einer stabil gebauten Hilfspalette als Zwischenträger oder eines auf Schienen laufenden Rolluntersatzes. Transportanlagen mit Rolluntersätzen weisen einen sehr niedrigen und konstanten Rollwiderstand auf, und die Erfahrung hat gezeigt, dass sie zur Automatisierung geeignet und wirtschaftlich sind, wobei die bekannten Nachteile aller anderen Gefällesysteme mit Erfolg vermieden werden. Besonders der sehr niedrige Rollwiderstand hat sich als Vorteil erwiesen. Der einzige Nachteil des Rolluntersatzes liegt in der Notwendigkeit der Verwendung und Handhabung dieses zusätzlichen Systemteils.

Der hier beschriebenen Erfindung liegt die Aufgabe zugrunde, eine Rollenbahn zu bauen, die mit einem sehr niedrigen, mit geringer Streuung reproduzierbaren Rollwiderstand und somit auch nach dem Gefälleprinzip arbeiten kann, ohne die genannten Nachteile bekannter Rollenbahnen aufzuweisen, indem jeder direkte Kontakt zwischen den Rollen und der unsicheren Palettenunterseite vermieden wird.

Die entscheidende Verbesserung wird nun bei der Rollenbahn nach der Erfindung dadurch erreicht, dass als Zwischenträger in Förderrichtung geführte Ketten vorgesehen sind, die jeweils eine Anzahl aufeinanderfolgender Rollen einer Reihe lose umschlingen, wobei die Aussenseite der Ketten als Auflager für die Paletten dient.

In der praktischen Ausführung liegen die in zwei oder mehr Strängen angeordneten Ketten auf rollengelagerten Leerlaufrollen, deren Achsabstand vorzugsweise geringer ist als die Breite der Tragbretter einer Normpalette und deren Durchmesser dementsprechend gering ist. Mechanisch korrekt ausgeführte Ketten, z.B. Glieder- oder Rollenketten, auf den Rollen gewährleisten längs der ganzen Rollenbahn die geforderte niedrige Rollreibung. Die Laschen solcher Ketten sind an der Aussenseite normalerweise derart kantig, dass die Holzbretter der Palette unverrückbar auf der Kette aufliegen. Die Ketten können aber auch zusätzliche Mittel zur rutschfesten Halterung der Paletten aufweisen. Die Palette kann sich somit nur zusammen mit der Kette bewegen, die ihrerseits mit dem Rollensystem einen Rollwiderstand aufweist, der nur einen Bruchteil desjenigen einer Rollenbahn beträgt, bei der die Paletten direkt auf den Rollen aufliegen. Da die Ketten gegen eine seitliche Verschiebung der darauf liegenden Palette einen extrem hohen Widerstand leisten (ca. 100% des darauf lastenden Gewichts), selbst aber z.B. an den Flanken von Umfangsnuten oder -rippen der Leerlaufrollen reibungsfrei seitlich geführt sind, werden die Paletten auf dieser Förderstrecke unverrückbar in der geplanten Spur gehalten. Seitenrollen und andere Führungen an den Palettenseiten mit ihren Betriebsrisiken sind daher nicht notwendig.

Förderanlagen für Paletten sind üblicherweise mit Vorschubeinrichtungen ausgerüstet, welche Mitnehmer in Bewegung setzen, die an den Paletten oder an deren Untersatz angreifen und auf diese Weise die Förderbewegung der Paletten bewirken. Eine bevorzugte Ausführungsform der erfindungsgemässen Rollenbahn besteht in dieser Beziehung darin, dass die Vorschubeinrichtung den Ketten einzeln zugeordnete Mitnehmer aufweist, die zur Erzielung der Förderbewegung entgegen der Vorschubeinrichtung bewegbar sind und jeweils in das rückwärts laufende Kettentrum eingreifen. Dabei können die Mitnehmer an einer unterhalb der Rollen sich längs der Bahn erstreckenden Schubstange angeordnet sein, die unter dem Einfluss einer Rückzugfeder eine Ruhelage einnimmt, in der sich die Mitnehmer ausser Eingriff mit den Ketten befinden. Der Arbeitshub der Schubstange kann z.B. durch einen Arbeitszylinder bewirkt werden.

Bei einer erfindungsgemässen Rollenbahn mit in Vorschubrichtung nach unten geneigter Bahn, z.B. einer Durchlaufbahn, kann aufgrund der definierten Rollreibungsverhältnisse die Bahnneigung so gewählt werden, dass auf der Bahn ruhende Paletten nicht von selbst in Bewegung geraten, sich auf der Bahn fortbewegende Paletten aber in Bewegung bleiben, wobei in diesem Fall die Vorschubeinrichtung dazu dient, ruhende Paletten durch einen einmaligen Stoss in Bewegung zu setzen. Die Weiterbewegung der Pa letten erfolgt erfahrungsgemäss oberhalb einer reproduzierbaren Geschwindigkeit gleichmässig und unabhängig vom Gewicht der belasteten Paletten. Es wird also auf dieser Bahn in den Paletten keine potentielle Energie gespeichert, die gefährlich werden könnte. In der Regel genügt es den betrieblichen Forderungen, wenn der Anstoss der Paletten nur dann erfolgt, wenn am Ausgangsende der Rollenbahn eine Palette entnommen wird. Infolgedessen kann der Arbeitshub der Schubstange mit den Mitnehmern z.B. durch ein Kraftübertragungsorgan bewirkt werden, das an dem für die Palettenentnahme bestimmten Bahnende angeordnet ist und jeweils durch die bei der Entnahme sich von der Rollenbahn entfernende Palette betätigt wird. Wenn am Eingangsende der geneigten Rollenbahn eine Palette eingegeben wird, so läuft diese mit der ihr bei der Eingabe erteilten Geschwindigkeit bis zum Ausgangsende durch und benötigt dazu keinen weiteren Anstoss.

Im Falle einer Durchlaufbahn sind vorzugsweise jeweils zwei aufeinanderfolgende Rollen einer Reihe von einer Kette umschlungen. Auf diese Weise wird das Aufschliessen der Paletten aufeinander beim Puffern nicht behindert. Demgegenüber eignet sich für eine Rollenbahn, die einen Einschubkanal mit Zufuhr und Entnahme der Paletten an ein und demselben Bahnende bildet, eine Ausführung, bei der die einzelnen Ketten jeweils sämtliche Rollen einer Reihe umschlingen.

Das Einschieben der Paletten gegen die Steigung eines Einschubkanals mit geneigter Bahn ist bei den vorbekannten Rollenbahnen ohne Zwischenträger gar nicht möglich, weil die Einschubkraft fast 10% des Gewichts der in der Bahn befindlichen Paletten betragen müsste, was von den Bedienungsfahrzeugen nicht aufgebracht werden kann. Deshalb gibt es bis heute Gegensteigungskanäle nur mit Rolluntersätzen.

Dank dem niederen Rollwiderstand der bei Einschubkanälen durchgehend angebrachten Ketten ist es problemlos möglich, vom tieferen Ende der Rollenbahn her die Paletten eine nach der anderen einzuschieben. Die Einschubkraft wird dabei so gering, auch bei längeren Rollenbahnen, dass sie von normalen Bedienungsfahrzeugen aufgebracht werden kann. Die Paletten bleiben im Einschublager auf den durchgehenden Kettensträngen immer zusammen, was betriebliche Vorteile mit sich bringt.

Die Rollenbahn eines Einschubkanals mit geneigter oder annähernd horizontaler Bahn ist mit einer Vorschubeinrichtung auszurüsten, die bei der Entnahme einer Palette den Nachschub der übrigen im Einschubkanal befindlichen Paletten bewirkt. Dazu kann eine Vorschubeinrichtung benützt werden, die an dem für die Entnahme der Paletten bestimmten Bahnende angeordnet ist und ein als Umlenkrolle für die Kette dienendes Kettenzahnrad aufweist, das über eine Freilaufkupplung mit einem neben der Kettenbahn angeordneten Triebrad zusammenwirkt, dessen Radius grösser ist als der äussere Radius der Kette im Umlenkbereich und das jeweils durch die bei der Entnahme sich von der Rollenbahn entfernende, auf dieses auflaufende Palette in Drehung versetzt wird.

Schliesslich lässt sich mit der Kettenanordnung des Durchlaufkanals ein sehr kostengünstiger und effizienter, angetriebener Pufferkanal bauen. Dessen Aufgabe besteht darin, am Ausgangsende des Kanals immer eine Palette zwecks Übernahme auf ein beliebiges nachfolgendes System vorrätig zu halten, sowie am Kanalbeginn vom vorhergehenden System zufällig ankommende Paletten zu übernehmen und durch Auf- und Abbau eines Puffers zwischen diesen beiden Endstationen einen Ausgleich zu schaffen. Das ist eine bisher mit den bekannten Kettentransportsystemen nicht gelöste Aufgabe. Werden die Ketten als sogenannte Staurollenketten ausgerüstet, so tritt bei der üblichen Qualität der Paletten erneut das seitliche Verlaufen derselben ein.

Die Aufgabe lässt sich mit der erfindungsgemässen Rollenbahn sehr gut lösen, indem diese aus drei Bahnabschnitten besteht, nämlich je einem jeweils eine Palette aufnehmenden Endabschnitt an beiden Bahnenden für die Zufuhr bzw. Entnahme der Paletten und einem mehrere Paletten aufnehmenden, als Pufferstrecke dienenden Mittelabschnitt, wobei die Ketten in den Endabschnitten jeweils sämtliche und im Mittelabschnitt jeweils zwei in Förderrichtung aufeinanderfolgende Rollen des betreffenden Bahnabschnitts umschlingen. Dabei kann jeder Bahnabschnitt eine eigene Vorschubeinrichtung aufweisen, die bei dieser horizontal verlaufenden Rollenbahn dazu dient, durch wiederholte Betätigung derselben eine schrittweise Förderbewegung herbeizuführen.

Nach der Stillsetzung der Vorschubeinrichtung rollen die Paletten nur wenig weiter.

Ein Pufferkanal dieser Art kann wie folgt betrieben werden:

Im ersten Bahnabschnitt (Eingangsstation) von der Länge einer Palette wird die Vorschubeinrichtung nach Erfüllung zweier Bedingungen in Betrieb gesetzt, nämlich:

    1. Eine Palette steht zur Aufnahme bereit, und

    2. der Pufferkanal kann gemäss Zählung in der Steuerung noch Paletten aufnehmen.

Dann führt die Vorschubeinrichtung eine definierte Zahl von Arbeitshüben aus, um die bereitstehende Palette um ihre eigene Länge in die Eingangsstation des Puffer-Kanals zu befördern.

Im letzten Bahnabschnitt (Ausgangsstation) von der Länge einer Palette wird die Vorschubeinrichtung nach Erfüllung zweier Bedingungen in Betrieb gesetzt, nämlich:

    1. Das nachfolgende System meldet Bereitschaft zur Aufnahme einer Palette, und

    2. auf diesem letzten Bahnabschnitt ist eine Palette als anwesend signalisiert.

Dann führt die Vorschubeinrichtung eine vorbestimmte Zahl von Arbeitshüben aus, um die Palette von der Ausgangsstation des Pufferkanals an den Aufnahmeplatz des nachfolgenden Systems zu befördern.

In dem beliebig langen als Pufferstrecke dienenden Mittelabschnitt werden die Paletten von der Eingangsstation jedesmal weitergeschoben, wenn eine neue Palette aufgenommen wird. Für diesen Vorgang sind keine Steuermittel erforderlich. Die Aufnahme von Paletten in die Pufferstrecke wird durch die Steuerung begrenzt, d.h. beim Erreichen der Kapazitätsgrenze erfolgen keine Aufnahmen mehr, und es entsteht ein Staupulk. Wenn hingegen das einzige für die Steuerung benötigte Signal der Ausgangsstation meldet, dass diese frei ist, so führt die Vorschubeinrichtung des Mittelabschnitts so viele Arbeitshübe aus, bis das Freisignal verschwindet, d.h. bis die Ausgangsstation wiederum besetzt ist.

Ist ein solcher Pufferkanal leer, und es kommt eine Palette an, so wird diese dank dieser Betriebsweise durch die normale Steuerung und ohne weitere Eingriffe sofort an das Kanalende befördert und steht dort zur Verfügung.

Erfolgen von der Ausgangsstation keine Entnahmen, so wird von der Eingangsstation her die Pufferstrecke dicht an dicht gefüllt, bis die Steuerung die Palettenzahl begrenzt.

Erfolgen von der Ausgangsstation Entnahmen, so fördert der Mittelabschnitt der Rollenbahn immer dann eine Palette in die Ausgangsstation, wenn diese frei geworden ist.

Der Aufwand an Steuerung und Mechanik ist sehr gering, da ein einziger Signalgeber in der Ausgangsstation und drei Arbeitszylinder mit Ventilen für eine beliebige Länge der Transportstrecke genügen.

In den beiliegenden Zeichnungen sind Ausführungsbeispiele der Erfindung dargestellt, und zwar zeigen:

    Fig. 1 schematisch eine Rollenbahn für einen Durchlaufkanal;

    Fig. 2 schematisch eine Rollenbahn für einen Einschubkanal;

    Fig. 3 schematisch eine Rollenbahn für einen Pufferkanal;

    Fig. 4 den grundsätzlichen Aufbau einer Rollenbahn nach der Erfindung, in Laufrichtung gesehen.

    Fig. 5 Seitenansicht eines Endabschnittes einer Rollenbahn für einen Durchlaufkanal, mit einer durch die Palette bei deren Entnahme betätigten Vorschubeinrichtung;

    Fig. 6 Querschnitt nach der Linie VI-VI in Fig. 5;

    Fig. 7 Ansicht in Richtung des Pfeils VII-VII in Fig. 5;

    Fig. 8 Seitenansicht eines Endabschnittes einer Rollenbahn für einen Einschubkanal, mit einer durch die Palette bei deren Entnahme betätigten Vorschubeinrichtung gemäss einer weiteren Ausführungsform;

    Fig. 9 Querschnitt nach der Linie IX-IX in Fig. 8;

    Fig. 10 Seitenansicht des anderen Endabschnittes der Rollenbahn nach Fig. 8, mit einem Kettenspanner;

    Fig. 11 Ansicht in Richtung des Pfeils XI in Fig. 10; und

    Fig. 12 Querschnitt nach der Linie XII-XII in Fig. 10.

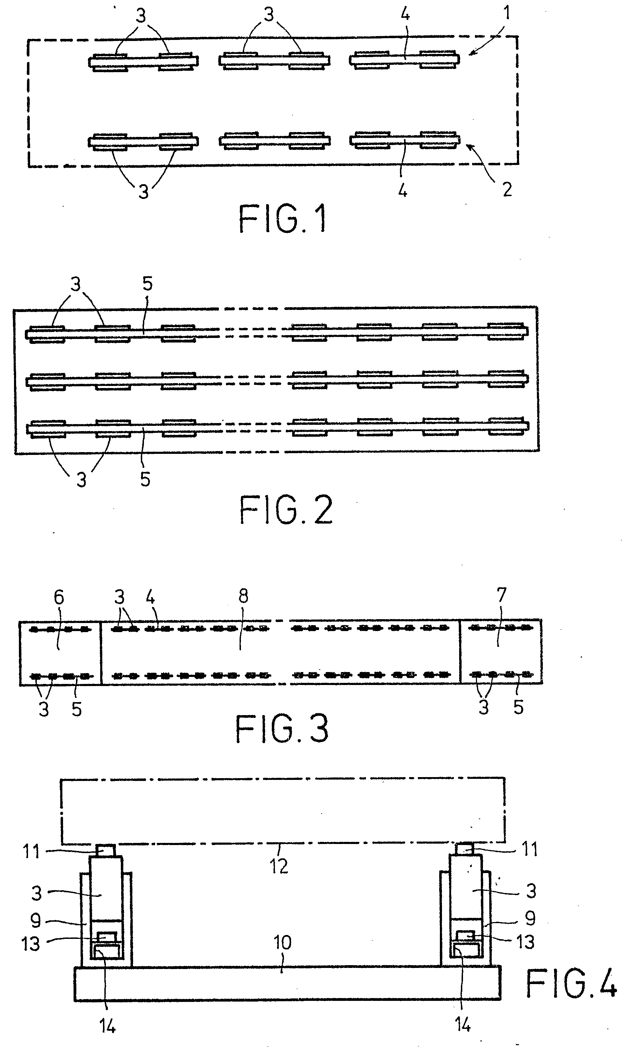

Die Rollenbahn nach Fig. 1 weist eine Mehrzahl von in zwei parallelen Reihen 1 und 2 angeordneten, in Förderrichtung drehbaren Leerlaufrollen 3 auf. Als Zwischenträger sind in Förderrichtung geführte Ketten 4 vorgesehen, die jeweils zwei in Förderrichtung aufeinanderfolgende Rollen 3 einer Reihe lose umschlingen. Der Achsabstand der Rollen 3 ist geringer als die Breite der Tragbretter einer Normpalette.

Bei der Rollenbahn nach Fig. 2, welche drei Reihen von Rollen 3 aufweist, umschlingen die einzelnen Ketten 5 jeweils sämtliche Rollen 3 einer Reihe. Für längere Einschubkanäle können mehrere Rollenbahnen dieser Art hintereinander angeordnet sein.

Die in Fig. 3 gezeigte, für einen Pufferkanal bestimmte Rollenbahn besteht aus drei Bahnabschnitten, nämlich je einem jeweils eine Palette aufnehmenden Endabschnitt 6 bzw. 7 an beiden Bahnenden für die Zufuhr bzw. Entnahme der Paletten und einem mehrere Paletten aufnehmenden, als Pufferstrecke dienenden Mittelabschnitt 8. Die Ketten 5 in den Endabschnitten 6 und 7 umschlingen gemäss Fig. 2 jeweils sämtliche Rollen 3 dieser Abschnitte, während die Ketten 4 im Mittelabschnitt 8 gemäss Fig. 1 jeweils zwei in Förderrichtung aufeinanderfolgende Rollen 3 umschlingen.

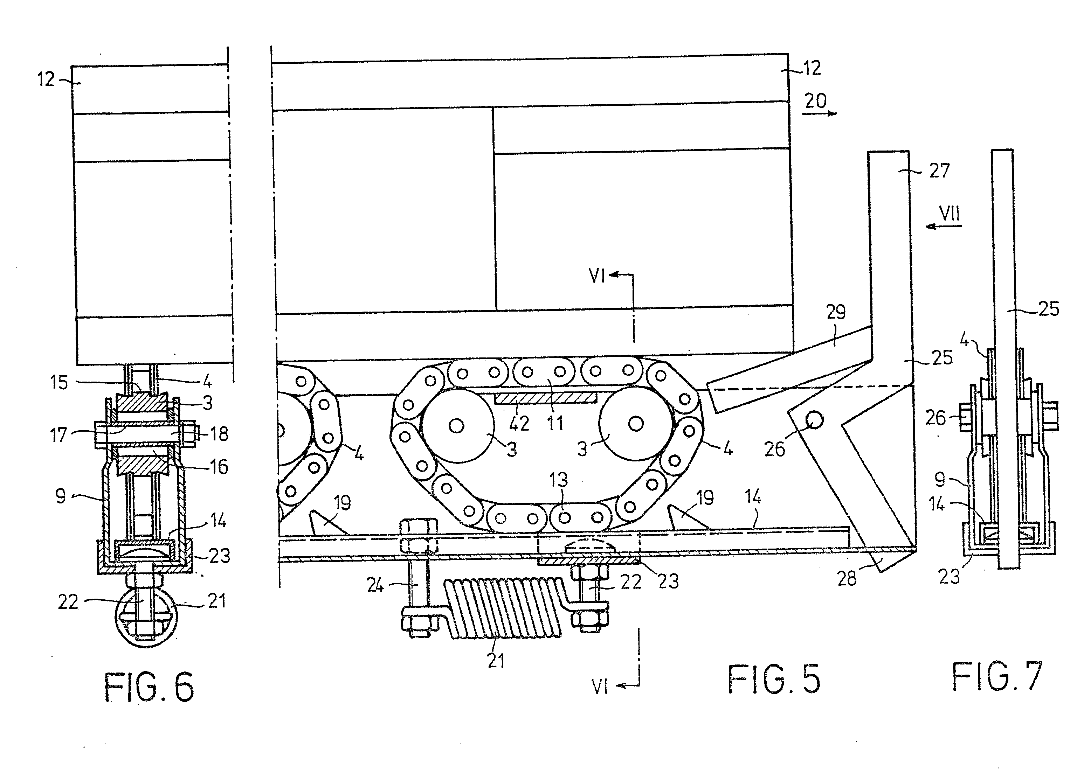

Grundsätzlich ist die Rollenbahn in ihren verschiedenen Ausführungsformen nach der schematischen Darstellung in Fig. 4 aufgebaut. Die Rollen 3 sind in U-förmigen Profilschienen 9 gelagert, welche auf Querträgern 10 eines nicht weiter gezeigten Untergestells ruhen. Das obere Trum 11 der die Rollen 3 umschlingenden Ketten dient jeweils als Zwischenträger für die Paletten 12, während das untere Trum 13 der Ketten im vorliegenden Beispiel auf einer C-förmigen Schubstange 14 aufliegt, welche in der Profilschiene 9 längsbeweglich gelagert ist und Teil einer Vorschubeinrichtung bildet, die im Zusammenhang mit Fig. 5 erläutert wird.

Die Fig. 5 bis 7 zeigen den Endabschnitt auf der Entnahmeseite einer nach Fig. 4 aufgebauten Rollenbahn. In beiden Figuren sind gleiche Teile mit gleichen Bezugszeichen versehen.

Gemäss Fig. 6 besitzen die Rollen 3 eine Umfangsrippe 15, an deren Flanken die Ketten 4 seitlich geführt sind. Die Rollen 3 sind je mit Wälzkörpern 16 auf einer Hülse 17 gelagert, die auf einem Schraubenbolzen 18 sitzt, welcher die beiden Schenkel der U-Profilschiene 9 miteinander verbindet.

Die Vorschubeinrichtung weist den Ketten 4 einzeln zugeordnete Mitnehmer 19 auf, die an der Oberseite der längsverschiebbaren Schubstange 14 angeordnet sind und die zur Erzielung der Förderbewegung entgegen der durch Pfeil 20 angedeuteten Förderrichtung bewegbar sind und jeweils in das rückwärts laufende, lose herabhängende Kettentrum 13 eingreifen. Die Schubstange 14 steht unter dem Einfluss einer vorgespannten Rückzugfeder 21, die einerseits mit einem Schraubenbolzen 22 an der mit einem Profilstück 23 an dieser Stelle verstärkten Profilschiene 9 verankert ist und andererseits an einem an der Schubstange 14 befestigten Schraubenbolzen 24 angreift. Unter der Wirkung der Rückzugfeder 21 nimmt die Schubstange 14 eine Ruhelage ein, in der sich die Mitnehmer 19 ausser Eingriff mit den Ketten 4 befinden. Der Arbeitshub der Schubstange 14 wird durch einen an dem für die Palettenentnahme bestimmten Bahnende angeordneten Hebel 25 bewirkt, der um die Achse 26 schwenkbar ist und jeweils durch die bei der Entnahme sich von der Rollenbahn ent fernende Palette 12 betätigbar wird. Dabei greift die Palette 12 am oberen Hebelarm 27 an, so dass der Hebel 25 im Uhrzeigersinn verschwenkt wird und der untere Hebelarm 28 die Schubstange 14 entgegen der Kraft der Rückzugfeder 21 verschiebt. Die auf die entnommene Palette 12 folgenden Paletten werden dadurch in Bewegung gesetzt, und sie werden wieder angehalten, wenn die vorderste der nachfolgenden Paletten auf die Rampe 29 aufläuft. Wie im übrigen aus Fig. 5 hervorgeht, können zwischen den in Förderrichtung aufeinanderfolgenden Rollen als Notrutschen dienende Tragstege 42 angeordnet sein.

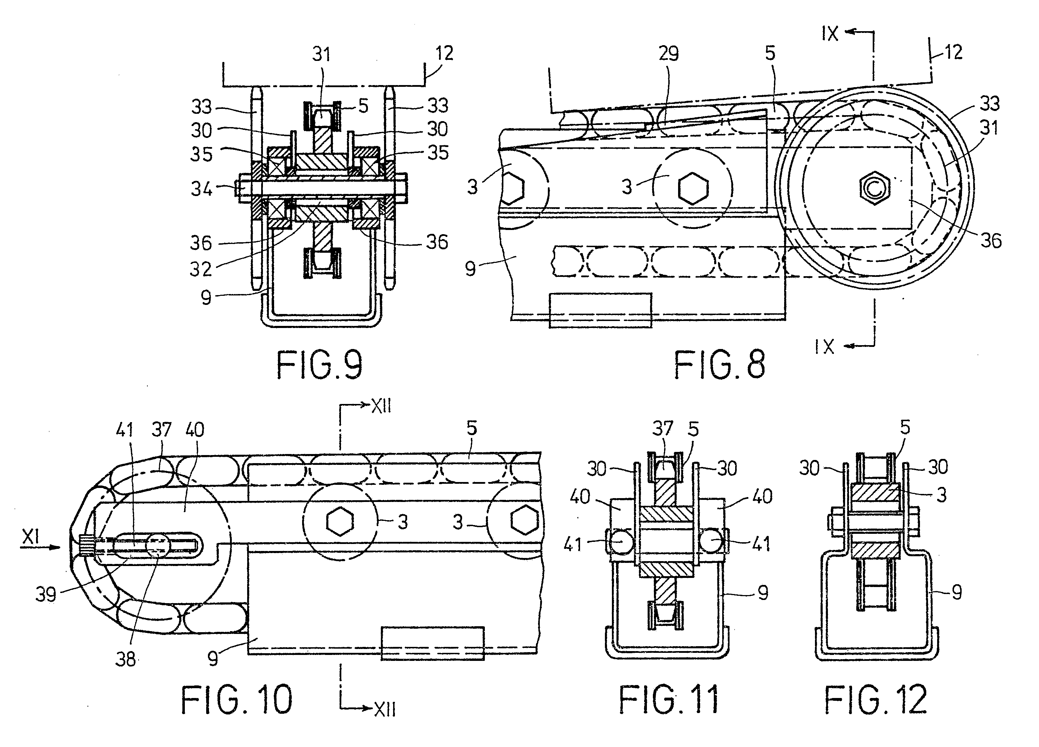

Die Fig. 8 bis 12 zeigen Einzelheiten einer Rollenbahn für einen Einschubkanal, wobei die Fig. 8 das für die Zufuhr und Entnahme der Paletten bestimmte Bahnende und die Fig. 10 das entgegengesetzte Bahnende darstellt.

Wie insbesondere aus Fig. 12 deutlich hervorgeht, besitzt die Profilschiene 9 abgekröpfte Schenkelenden 30, die einen geringeren Abstand voneinander haben als die Schenkel an der Schienenbasis. Die Rollen 3 sind im Bereich dieser Schenkelenden 30 an der Profilschiene 9 gelagert und besitzen eine glatte Lauffläche. In diesem Ausführungsbeispiel dienen die genannten Schenkelenden 30 als Kettenführung, wobei zusätzlich an der Innenseite der Schenkelenden z.B. aus Teflon bestehende Gleitbeläge angebracht sein können. Im übrigen entspricht die Rollenlagerung derjenigen nach Fig. 6.

Die Vorschubeinrichtung ist an dem für die Zufuhr und Entnahme der Paletten 12 bestimmten Bahnende angeordnet und weist ein als Umlenkrolle für die Kette 5 dienendes Kettenzahnrad 31 auf. Dieses wirkt über eine Freilaufkupplung 32 mit zwei neben der Kettenbahn angeordneten Triebrädern 33 zusammen, deren Radius grösser ist als der äussere Radius der Kette 5 im Umlenkbereich. Die gemeinsame Achse 34 der Vorschubeinrichtung ist mit Wälzlagern 35 am Ende zweier Träger 36 gelagert, welche in der Verlängerung der Profilschiene 9 angeordnet und an dieser befestigt sind. Bei der Entnahme der an der Rampe 29 anstehenden Palette 12 wird diese auf die Triebräder 33 aufgelegt (Fig. 8) und über letztere weggezogen. Dabei kommt die Freilaufkupplung 32 zum Eingriff, so dass das Kettenzahnrad 31 mitgedreht und die nachfolgenden Paletten auf der nachgezogenen Kette 5 in Förderrichtung bewegt werden. Bei der Zufuhr von Paletten am gleichen Bahnende werden die Triebräder 33 im entgegengesetzten Drehsinn gedreht, wobei die Freilaufkupplung sich löst und die Einschubbewegung nicht behindert. Gemäss den Fig. 8 und 9 sind als Triebräder Kettenzahnräder vorgesehen. Es können aber auch Triebräder mit zahnloser Lauffläche verwendet werden, die einen Reibbelag, z.B. aus Gummi, aufweisen.

Am anderen Ende dieser Rollenbahn ist eine Kettenspanneinrichtung vorgesehen. Als Umlenkrolle für die Kette 5 dient auch hier ein Kettenzahnrad 37, das auf einer in Längsrichtung der Kettenbahn verschiebbaren Achse 38 gelagert ist. Diese Achse 38 ist in Längsschlitzen 39 von zwei mit der Profilschiene 9 ver bundenen Trägern 40 gehalten und mit Spannschrauben 41 in der gewünschten Position fixierbar.

Mit der Rollenbahn nach den Fig. 8 bis 12 lässt sich ein Einschubkanal verwirklichen, der nur eine sehr geringe oder gar keine Bahnneigung erfordert.

Zusammenfassend lassen sich die Eigenschaften und Vorteile der Erfindung wie folgt darstellen:

Zwischen die Palettenunterfläche und die Laufrollen geringen Durchmessers sind jeweils Glieder- oder Rollenketten als Zwischenträger eingesetzt, so dass die Paletten nicht direkt auf den Rollen laufen. Dabei haben die Glieder- oder Rollenketten gegenüber der Palette eine hohe Reibung besonders quer zur Kettenachse aufweisen, die Rollen in Laufrichtung zusammen mit der Kette jedoch einen geringen Rollwiderstand.

Bei einem Durchauflager sind die Kettentrums in sehr kurzen Abständen geschlossen und erlauben somit das ungehinderte Aufschliessen bis auf den Achsabstand des kurzen Kettentrums, so dass jede Palette für sich bewegt werden kann.

Bei einem Einschublager sind die Kettentrums in grossen Abständen geschlossen, so dass alle auf der Kette sitzenden Paletten gleichmässig miteinander bewegt werden.

Im Fall von Pufferbahnen zwischen zwei Arbeitsstationen ist die Bahn in drei Teilstücke aufgeteilt, von welchen jede für sich mit einem pneumatischen Antrieb betätigt werden kann. Dabei dient das erste Teilstück von ca. Palettenlänge der Evakuierung der vorgeschalteten und das letzte Teilstück von ca. Palettenlänge der Füllung der nachfolgenden Arbeitsstation, während das beliebig lange Mittelstück Paletten in das letzte Teilstück fördert, sobald diese leer ist.

Vorzugsweise ist die Bahn so ausgebildet, dass die Neigung der Bahn in Laufrichtung knapp dazu genügt, eine bereits in Bewegung befindliche Palette am Weiterrollen zu halten, währenddem ein besonderes, durch die weggenommene vorderste Palette betätigtes Anschubsystem die Paletten aus dem Zustand der Ruhestellung in den Zustand der Rollreibung anstösst. Das Anschubsystem weist dabei Mitnehmer auf, welche die Palette über Formschluss (Querbretter) oder über Reibschluss (Längsbretter) anstossen.

Die Koppelung zwischen wegzunehmender vorderster Palette und dem auf dem Anschubsystem sitzenden Mitnehmern wird gelöst, so bald der Anstoss auf die planmässige Länge erfolgt ist, so dass die Palette ungestört in horizontaler Richtung wegtransportiert werden kann und auch bei fehlerhaftem Verhalten des Gabelstaplerfahrers nicht hängenbleibt.

Die Kettenlasche weist mit Vorteil einen Aussenradius auf, der dem grössten Abstand vom Tragrollenzentrum entspricht, um damit den Polygoneffekt der Kette unwirksam zu machen, der sonst an dieser Stelle auftreten könnte.

## Patentansprüche

1. Rollenbahn für die Förderung von Paletten (12), insbesondere Holzpaletten, mit einer Mehrzahl von in mehreren parallelen Reihen (1, 2) angeordneten, in Förderrichtung drehbaren Leerlaufrollen (3) und einem Zwischenträger, dadurch gekennzeichnet, dass als Zwischenträger in Förderrichtung geführte Ketten (4, 5) vorgesehen sind, die jeweils eine Anzahl aufeinanderfolgender Rollen (3) einer Reihe lose umschlingen, wobei die Aussenseite der Ketten (4, 5) als Auflager für die Paletten (12) dient.

2. Rollenbahn nach Anspruch 1, dadurch gekennzeichnet, dass der Achsabstand der Rollen (3) geringer ist als die Breite der Tragbretter einer Normpalette (12).

3. Rollenbahn nach Anspruch 1, für einen Durchlaufkanal, dadurch gekennzeichnet, dass die einzelnen Ketten (4) jeweils zwei aufeinanderfolgende Rollen (3) einer Reihe umschlingen.

4. Rollenbahn nach Anspruch 1, für einen Einschubkanal mit Zufuhr und Entnahme der Paletten an ein und demselben Bahnende, dadurch gekennzeichnet, dass die einzelnen Ketten (5) jeweils sämtliche Rollen (3) einer Reihe umschlingen.

5. Rollenbahn nach Anspruch 1, für einen Pufferkanal, dadurch gekennzeichnet, dass sie aus drei Bahnabschnitten (6, 7, 8) besteht, nämlich je einem jeweils eine Palette (12) aufnehmenden Endabschnitt (6, 7) an beiden Bahnenden für die Zufuhr bzw. Entnahme der Paletten (12) und einem mehrere Paletten (12) aufnehmenden, als Pufferstrecke dienenden Mittelabschnitt (8), dass die Ketten (5) in den Endabschnitten (6, 7) jeweils sämtliche und die Ketten (4) im Mittelabschnitt (8) jeweils zwei in Förderrichtung aufeinanderfolgende Rollen (3) des betreffenden Bahnabschnitts umschlingen.

6. Rollenbahn nach Anspruch 1, dadurch gekennzeichnet, dass sie wenigstens eine die Förderbewegung der Paletten (12) bewirkende Vorschubeinrichtung (14) aufweist.

7. Rollenbahn nach Anspruch 6, dadurch gekennzeichnet, dass die Vorschubeinrichtung (14) den Ketten (4, 5) einzeln zugeordnete Mitnehmer (19) aufweist, die zur Erzielung der Förderbewegung entgegen der Vorschubrichtung bewegbar sind und jeweils in das rückwärts laufende Kettentrum (13) eingreifen.

8. Rollenbahn nach Anspruch 7, dadurch gekennzeichnet, dass die Mitnehmer (19) an einer unterhalb der Rollen (3) sich längs der Bahn erstreckenden Schubstange (14) angeordnet sind, die unter dem Einfluss einer Rückzugfeder (21) eine Ruhelage einnimmt, in der sich die Mitnehmer (19) ausser Eingriff mit den Ketten (4, 5) befinden.

9. Rollenbahn nach Anspruch 8, dadurch gekennzeichnet, dass der Arbeitshub der Schubstange (14) durch ein Kraftübertragungsorgan bewirkt wird, das an dem für die Palettenentnahme bestimmten Bahnende angeordnet ist und jeweils durch die bei der Entnahme sich von der Rollenbahn entfernende Palette betätigt wird.

10. Rollenbahn nach den Ansprüchen 4 und 6, dadurch gekennzeichnet, dass die Vorschubeinrichtung (14) an dem für die Entnahme der Paletten (12) bestimmten Bahnende angeordnet ist und ein als Umlenkrolle für die Kette (5) dienendes Kettenzahnrad (31) aufweist, das über eine Freilaufkupplung (32) mit wenigstens einem neben der Kettenbahn angeordneten Triebrad (33) zusammenwirkt, dessen Radius grösser ist als der äussere Radius der Kette (5) im Umlenkbereich und das jeweils durch die bei der Entnahme sich von der Rollenbahn entfernende, auf dieses auflaufende Palette in Drehung versetzt wird.

11. Rollenbahn nach Anspruch 6, mit in Vorschubrichtung nach unten geneigter Bahn, dadurch gekennzeichnet, dass die Bahnneigung so gewählt ist, dass auf der Bahn ruhende Paletten (12) nicht von selbst in Bewegung geraten, sich auf der Bahn fortbewegende Paletten (12) aber in Bewegung bleiben, wobei die Vorschubeinrichtung dazu dient, ruhende Paletten durch einen einmaligen Stoss in Bewegung zu setzen.

12. Rollenbahn nach Anspruch 6, mit horizontal verlaufender Bahn, dadurch gekennzeichnet, dass die Vorschubeinrichtung dazu dient, durch wiederholte Betätigung derselben eine schrittweise Förderbewegung herbeizuführen.

13. Rollenbahn nach Anspruch 1, dadurch gekennzeichnet, dass als Zwischenträger Glieder- oder Rollenketten (4, 5) eingesetzt sind.

14. Rollenbahn nach den Ansprüchen 1 oder 13, dadurch gekennzeichnet, dass die als Auflager für die Paletten (12) dienende Aussenseite der Ketten (4, 5) Mittel zur rutschfesten Halterung der Paletten aufweist.

15. Rollenbahn nach Anspruch 14, dadurch gekennzeichnet, dass die Laschen der Ketten (4, 5) an der Aussenseite scharfkantig ausgebildet und/oder mit Zacken versehen sind.

16. Rollenbahn nach Anspruch 14, dadurch gekennzeichnet, dass die Laschen der Ketten (4, 5) an der Aussenseite mit Plättchen aus einem elastisch verformbaren Material, z.B. Gummi, versehen sind.

17. Rollenbahn nach Anspruch 13, dadurch gekennzeichnet, dass die Aussenkontur der Kettenlaschen in einem zum Rollenumfang konzentrischen Kreisbogen verläuft.

18. Rollenbahn nach Anspruch 1, dadurch gekennzeichnet, dass die Rollen (3) eine Umfangsnut oder eine Umfangsrippe (15) aufweisen, an deren Flanken die Ketten (4, 5) seitlich geführt sind.

19. Rollenbahn nach Anspruch 1, dadurch gekennzeichnet, dass die Rollen (3) in U-Schienen (9) gelagert sind, deren Schenkel als Kettenführung dienen.

20. Rollenbahn nach Anspruch 19, dadurch gekennzeichnet, dass an der Innenseite der Schenkel Gleitbeläge angebracht sind.

21. Rollenbahn nach Anspruch 1, dadurch gekennzeichnet, dass zwischen den in Förderrichtung aufeinanderfolgenden Rollen (3) als Notrutschen dienende Tragstege (42) angeordnet sind.

22. Durchlauflager, dadurch gekennzeichnet, dass es wenigstens einen Durchlaufkanal mit einer Rollenbahn nach Anspruch 3 aufweist.

23. Einschublager, dadurch gekennzeichnet, dass es wenigstens einen Einschubkanal mit einer Rollenbahn nach Anspruch 4 aufweist.

24. Pufferlager, dadurch gekennzeichnet, dass es wenigstens einen Pufferkanal mit einer Rollenbahn nach Anspruch 5 aufweist.

FIG.1

FIG.2

FIG.3

FIG.4

FIG. 6

FIG. 5

FIG. 7

EP 0 343 111 A2

FIG.9

FIG.8

FIG.10

FIG.11

FIG.12

EP 0 343 111 A2